# EUROPÄISCHE PATENTSCHRIFT

(11) **EP 0 683 345 B1**
(45) Veröffentlichungstag und Bekanntmachung des Hinweises auf die Patenterteilung: **27.01.1999**
(21) Anmeldenummer: 95107375.8
(22) Anmeldetag: 16.05.1995
(51) Int. Cl.: F16L 37/10, F01N 7/18

(54) **Vorrichtung zur Verbindung von Rohren für Abgasanlagen von Kfz.**
Device for connecting pipes for motor vehicle exhaust systems
Dispositif pour l'assemblage de tuyaux pour systèmes de gaz d'échappement de véhicules

(30) Priorität: 21.05.1994 DE 4417983
(43) Veröffentlichungstag der Anmeldung: 22.11.1995
(73) Patentinhaber: Schmitz & Brill GmbH, D-57413 Finnentrop (DE)
(72) Erfinder: Willeke, Winfried, D-57439 Attendorn (DE)
(74) Vertreter: Patentanwälte Dipl.-Ing. Conrad Köchling Dipl.-Ing. Conrad-Joachim Köchling

(56) Entgegenhaltungen:
- EP-A- 0 522 410
- DE-C- 906 275
- FR-A- 2 664 672
- US-A- 3 443 911

## Beschreibung

Die Erfindung betrifft eine Vorrichtung zur Verbindung von Rohren für Abgasanlagen von Kfz., wobei die miteinander zu verbindenden Rohrenden koaxial zueinander gerichtet und durch Verbindungsmittel miteinander lösbar verbindbar sind, am Rohrende des einen Rohres eine radial umlaufende Stützrippe ausgebildet ist, am Rohrende des anderen Rohres ein unterbrochenes Gewinde ausgebildet ist und als Verbindungsmittel eine Aufsteckhülse vorgesehen ist, die auf das mit umlaufender Stützrippe versehene Rohr vom der Stützrippe abgewandten Ende aufsteckbar und mit einem Anschlagrand gegen die dem Rohrende abgewandte Flanke der Stützrippe anlegbar ist, die mit einem im Durchmesser größeren Bereich das Rohrende überragt und in diesem überragenden Bereich ein unterbrochenes Gewinde aufweist, so daß die Hülse mit auf die Unterbrechungen des Gewindes des Rohrendes ausgerichteten Gewindeteilen axial auf das andere Rohrende aufschiebbar ist und dann drehbar ist, so daß die Gewindeteile der Hülse und die Gewindeteile des Rohrendes in Eingriff sind und die Verbindung anziehbar ist.

Bisher ist es üblich, Auspuffrohre mit Hilfe von zwei Flanschen und einer Dichtung zusammenzufügen, wobei die Flansche mittels Schrauben gegeneinander angezogen werden. Hierbei ist es erforderlich, die Schrauben des Flansches möglichst gleichmäßig anzuziehen um Undichtigkeiten zu vermeiden. Je nach Flanschverbindung werden bis zu sechs Schrauben benötigt. Die Flanschverbindung ist oft Ausgangspunkt von Lebensdauerproblemen, was aus Undichtigkeiten im Flanschbereich resultiert.

Aus der FR 2 664 672 A ist eine gattungsgemäße Vorrichtung zur Verbindung von Rohren bekannt. Dabei sind die einzelnen Elemente relativ massive Teile, die im Wege der feinmechanischen Bearbeitung individuell bearbeitet worden sind, um den Wirkungszusammenhang herzustellen. Dazu ist an dem einen Rohrende eine umlaufende massive Rippe ausgebildet, während das andere Rohrende mit unterbrochenem Außengewinde versehen ist. Als Kopplungselement ist eine Überwurfmutter mit unterbrochenem Innengewinde vorgesehen, die auf das mit der Rippe versehene Rohrende aufgeschoben werden kann, mit einem Anschlagkragen gegen die Rippe angelegt werden kann und mit dem unterbrochenen Gewinde auf das unterbrochene Gewinde des anderen Rohrendes aufsteckbar und zum Eingriff des Gewindes verdrehbar ist.

Eine derartige Ausbildung ist relativ kompliziert und in der Fertigung kostenintensiv.

Ausgehend von diesem Stand der Technik liegt der Erfindung die Aufgabe zugrunde, eine Vorrichtung gattungsgemäßer Art zu schaffen, mit der in einfacher Weise und unter Verwendung weniger Einzelteile eine Verbindung von Rohren für Abgasanlagen hergestellt werden kann.

Eine erste Lösung dieser Aufgabe ist im Anspruch 1 angegeben.

Gegenstand der Erfindung ist ferner eine Vorrichtung zur Verbindung von Rohren, für Abgasanlagen von Kfz, wobei die miteinander zu verbindenden Rohrenden koaxial zueinander gerichtet und durch ein Verbindungsmittel miteinander lösbar verbindbar sind, beide Rohrenden mit gegenläufiger Gewindeausbildung versehen sind, als Verbindungsmittel eine Hülse mit gegenläufiger Gewindeausbildung an ihren Enden vorgesehen ist.

Aus der EP 0 522 410 A ist eine gattungsgemäße Vorrichtung bekannt. Dabei ist aber eine platzsparende schnelle Montage nicht möglich, sondern sowohl die Herstellung als auch die Montage ist aufwendig.

Zur Lösung der oben definierten Aufgabe schlägt die Erfindung die Merkmale von Anspruch 2 vor.

Bei diesen Lösungen ist vorzugsweise vorgesehen, daß die beiden Rohrenden im Bereich der Verbindungsstelle begrenzt ineinandersteckbar sind.

Desweiteren kann bevorzugt vorgesehen sein, daß die beiden Rohrenden im Bereich der Verbindungsstelle aneinanderlegbare Endkanten aufweisen, wobei vorzugsweise ein Dichtelement zwischen gefügt ist.

Aus dem Stand der Technik ist ferner eine Vorrichtung zur Verbindung von Rohren wobei die miteinander zu verbindenden Rohrenden koaxial zueinander gerichtet und miteinander lösbar verbindbar sind und das Verbindungselement ein elastisches Entkopplungsmittel aufweist, bekannt.

Hierzu wird beispielsweise auf die US 3,443,911 A verwiesen. Dort ist ein elastisches Entkopplungsmittel vorgesehen, welches mit einem Ende in das eine Rohrstück eingesteckt und mit dem anderen auf das andere Rohrstück aufgesteckt ist.

Zur Lösung der eingangs gestellten Aufgabe schlägt die Erfindung ausgehend von diesem Stand der Technik die Merkmale des Anspruchs 5 vor.

Desweiteren ist bevorzugt vorgesehen, daß die Aufsteckhülse im Querschnitt mindestens über einen Teil ihrer Länge polygonal ausgebildet ist.

Hierdurch ist das einfache Anziehen der Verbindung möglich, da die polygonale Ausbildung der Aufsteckhülse zum Ansatz eines Schraubenschlüssels oder dergleichen benutzt werden kann.

Um ein selbständiges Lösen der Verbindung weitestgehend auszuschließen ist zudem vorgesehen, daß die Gewindegangteile der Aufsteckhülse und/oder der Rohrenden gerauhte, geriffelte oder in sonstiger Weise reibungserhöhende Ausbildung mindestens in den Bereichen aufweisen, die bei angespannter Verbindung mit Teilen des jeweils anderen Elementes im Berührungskontakt stehen.

Ein bevorzugtes Verfahren zur Herstellung einer Vorrichtung nach den Ansprüchen 1 bis 7 wird darin gesehen, daß ein Rohrstück im Wege der hydrostatischen Aufweitung derart geformt wird, daß die Einzelelemente der Vorrichtung in axialer Folge einstückig gebildet werden, nämlich die Rohrstücke mit Stützrippen oder -sicken und/oder unterbrochenen Gewindegängen sowie die Aufsteckhülse mit Anschlagrand und/oder unterbrochenen Gewindegängen und daß der so geformte Körper zur Bildung der Einzelelemente durch quer zu dessen Längsachse verlaufende Trennvorgänge aufgetrennt wird.

Durch die erfindungsgemäße Ausbildung ist es in einfacher Weise möglich, Rohre zusammenzustecken oder aneinander zu fügen und mit der Aufsteckhülse gegeneinander anzuspannen, wodurch die gewünschte Verbindung in einfacher Weise und sehr sicher hergestellt ist. Dabei ist die Montage sehr schnell durchzuführen, was insbesondere bei der Montage beim Automobilhersteller ein wesentlicher Vorteil ist. Die Vorrichtung besteht aus wenigen Einzelteilen. Es wird eine gleichmäßige Schwingungsverteilung auch bezüglich der Verbindungsstelle erreicht, weil sich die Verbindung selbst wie ein Rohr verhält.

Die Teile lassen sich im Wege der sogenannten Hydroumformung in sehr engen Toleranzen herstellen, so daß eine prozeßsichere Montage gegeben ist. Im Servicefall läßt sich die Verbindung auch einfach trennen, so daß ein Ersatz von defekten Teilen in einfacher Weise möglich ist. Vorzugsweise bestehen alle Einzelteile der Verbindung aus Edelstahl.

Es ist selbstverständlich auch im Rahmen der Erfindung möglich, anstelle von einwandigen Rohren auch mehrwandige Rohre gegebenenfalls unter Luftspaltbildung einzusetzen. Auch der Einsatz von integrierten Entkopplungselementen ist in einfacher Weise möglich.

Die zur Verbindung benötigten Rohrstücke werden vorzugsweise als nur kurze Rohrelemente gefertigt, die dann gegebenenfalls vor oder nach dem Aufsetzen der Aufsteckhülse an ein entsprechendes langes Rohrstück der Abgasanlage angeschweißt werden können.

Ausführungsbeispiele der Erfindung sind in der Zeichnung dargestellt und im folgenden näher beschrieben. Es zeigt:
- Fig. 1 und 2: Eine erste Ausführungsform in Ansicht, teilweise geschnitten, sowie im Querschnitt;
- Fig. 3: eine Einzelheit in Variante;
- Fig. 4 und 5: eine Erläuterung des Herstellungsvorganges der Einzelelemente der Verbindung;
- Fig. 6 und 7: eine Variante in den Ansichten gemäß Figur 1 und 2;
- Fig. 8: eine weitere Variante in der Ansicht gemäß Figur 1 und 6;
- Fig. 9 und 10: die Variante gemäß Figur 6 im Herstellungsverfahren.

Alle Ausführungsformen zeigen eine Vorrichtung zur Verbindung von Rohren für Abgasanlagen von Kfz., wobei die miteinander zu verbindenen Rohrenden koaxial zueinander gerichtet und durch Verbindungsmittel miteinander lösbar verbindbar sind.

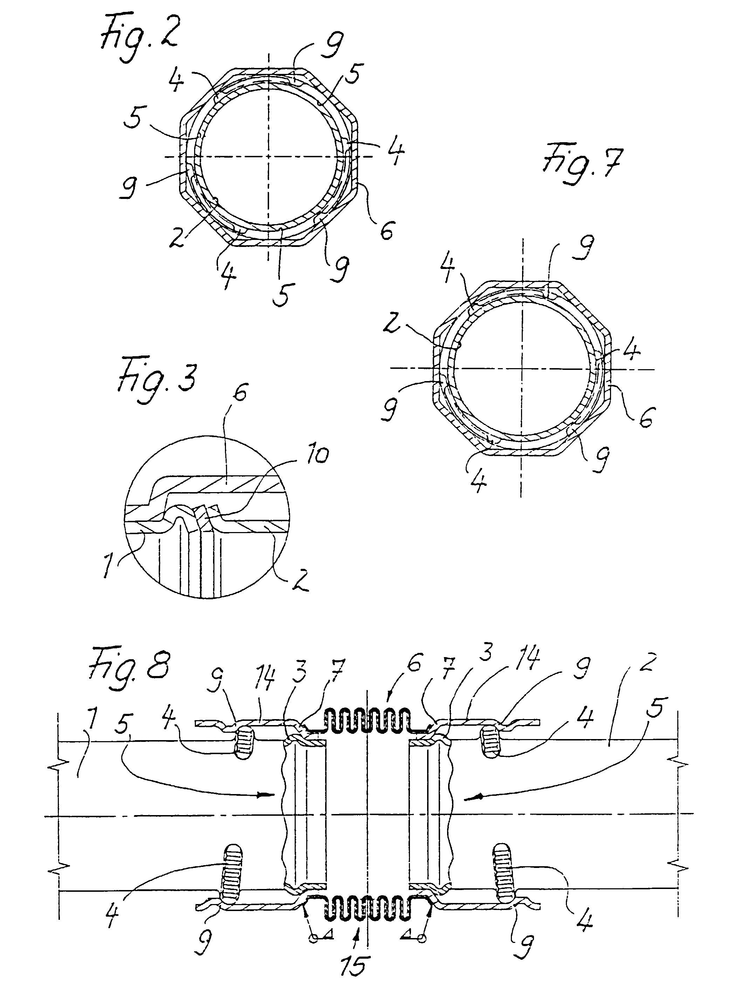

Erfindungsgemäß sind an die Rohre, die Bestandteil der Abgasanlage sind, jeweils endseitig Rohre 1, 2 angeschweißt. Am Rohrende des einen Rohres 1 ist eine radial umlaufende, nach außen vorragende Stützrippe 3 oder, die als Sicke ausgebildet ist. Am Ende des anderen Rohres 2 ist eine Rippe als Sicke 4 nach Art eines unterbrochenen Gewindeganges ausgebildet. Wie insbesondere aus der Schnittdarstellung gemäß Figur 2 ersichtlich, ist diese Rippe 4 in drei Segmente aufgeteilt, die jeweils etwa ein Sechstel des Umfanges des Rohrstückes 2 einnehmen. Zwischen den nach außen vorragenden Bereichen der Rippe sind ungerippte Unterbrechungen vorgesehen. Als Verbindungsmittel ist eine Aufsteckhülse 6 angeordnet, die auf das mit der umlaufenden Sicke 3 versehene Rohr 1 vom der Sicke 3 abgewandten Ende (in Zeichnungsfigur 1 von links) her aufsteckbar und mit einem Anschlagrand 7 gegen die dem Rohrende abgewandte Flanke der Sicke 3 anlegbar ist. Die Aufsteckhülse 6 ist in dem freien Endbereich, der dem Anschlagrand 7 folgt und der mit 8 bezeichnet ist, eng an den Durchmesser des Rohrstückes 1 angepaßt und im Schiebesitz auf diesem beweglich. Zur Bildung des Anschlagrandes 7 ist die Aufsteckhülse quasi verkröpft ausgebildet. Dieser im Durchmesser aufgeweitete Bereich überragt das Rohrende des Rohres 1 in Richtung auf das andere Rohrende 2, wobei in diesem überragenden Bereich Anzugsflächen 9 nach Art eines unterbrochenden Gewindganges ausgebildet sind, die nach radial innen vorragen. Auch diese Anzugsflächen 9 sind, wie insbesondere auch aus Figur 2 ersichtlich, in Dreifachanordnung gleichmäßig auf den Innenumfang verteilt angeordnet und ausgebildet, wobei zwischen den einzelnen Anzugsflächen 9 Freiräume verbleiben, die in Umpfangsrichtung der Länge der Rippen 4 entsprechen bzw. gering größer sind.

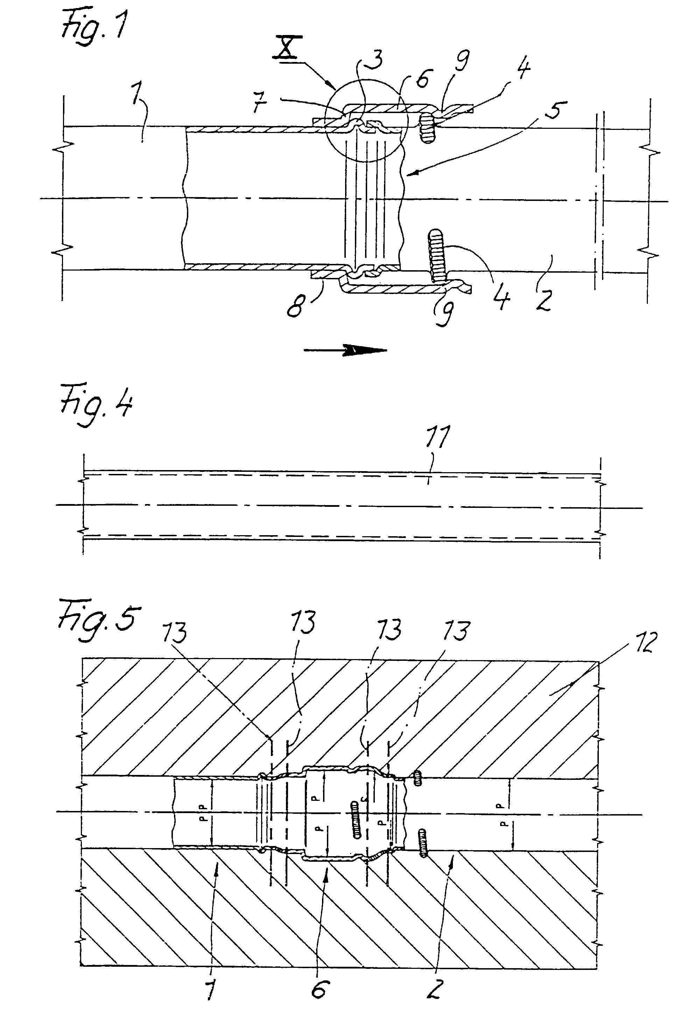

Zur Montage wird zunächst nach der Anordnung der Aufsteckhülse auf dem Rohrstück 1 das Rohrstück 2 auf das Ende des Rohrstückes 1 aufgeschoben und aufgesteckt, wozu der Endbereich des Rohres 2 geringfügig abgekröpft ist. Es wird somit ein störungsfreier Durchfluß von Abgas oder dergleichen im Stoßbereich ermöglicht. Nachfolgend wird dann die Aufsteckhülse 6 gemäß Zeichnungsfigur 1 nach rechts verschoben und zwar in die Position, die in Figur 1 gezeigt ist. Dabei ist die Aufsteckhülse 6 zur Montage so verdreht, daß die Anzugsflächen 9 durch die Freiräume bei 5 axial hindurchgleiten können. Zur endgültigen Fixierung der Verbindung wird dann die Aufsteckhülse 6 um ihre Längsachse gedreht, so daß die Anzugsflächen 9 an den Sicken 4 angreifen und beim weiteren Verdrehen der Aufsteckhülse 6 die Verbindung axial festgezogen werden kann.

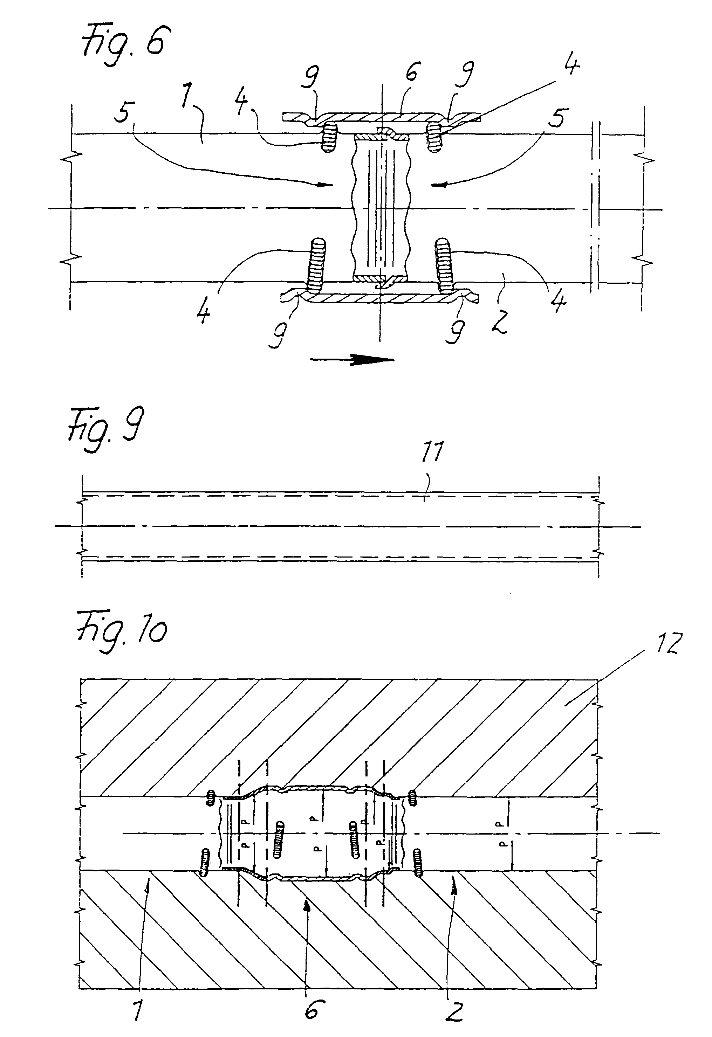

Es ist auch möglich, anstelle des Einsteckens der Enden der Rohre 1 und 2 diese unter Zwischenfügung einer Dichtscheibe 10 mit der Aufsteckhülse 6 zusammenzuziehen, wie aus der Einzelheitdarstellung gemäß Figur 3 ersichtlich ist.

Zur Herstellung der Einzelelemente der Vorrichtung, die beispielsweise in Figur 1 gezeigt sind, ist es möglich das an sich bekannte Hydroumformverfahren zu benutzen. Hierbei wird ein Rohrstück 11 mit entsprechendem Querschnitt als Rohling benutzt. Dieser Rohling wird in eine zweiteilige Werkzeugform 12 eingelegt, die eine Innenkontur aufweist, die dem zuformenden Werkstück entspricht. Nach dem Einlegen des Rohlings 11 in die untere Formhälfte des Werkzeuges 12 wird die obere Formhälte aufgesetzt. Nachfolgend wird dann hydrostatischer Druck mittels in die Form und in das Rohrstück 11 eingebrachten Wasser oder dergleichen aufgebaut und zwar in der Größenordnung von 4000 bis 6000 bar. Der Rohling 11 wird dann in die Kontur aufgeweitet, die in Figur 5 gezeigt ist.

Es ist nicht nur möglich in der Werkzeugform 12 ein einzelnes entsprechendes Werkstück zu formen, sondern es können bei einer Vielfachhintereinanderanordnung von entsprechenden Konturen in einem Arbeitsgang aus einem langen Rohling 11 mehrere entsprechende Elemente geformt werden. Die fertigen Elemente gemäß der Darstellung in Figur 5 werden dann in die Einzelteile zerlegt, wobei Trennschnitte gemäß den Trennschnittlinien 13 in Figur 5 durchgeführt werden. Auf diese Weise werden die Rohrstücke 1 und 2 und die Aufsteckhülse 6 gefertigt. Entsprechende Trennschnitte 13 können auch an den Enden der Rohrstücke 1 und 2 vorgenommen werden, die der Aufsteckhülse 6 abgewandt sind, sofern in der Werkzeugform mehrere entsprechende Elemente in axialer Folge angeordnet und ausgebildet sind.

Die Herstellung im Wege der Hydroumformung ist nicht nur einfach zu bewerkstelligen und zwar hinsichtlich aller erforderlichen Formgebungsbestandteile, sondern diese Herstellung führt auch dazu, daß ein fertiges Werkstück mit nur geringen Fertigungstoleranzen entsteht, so daß ein exakter Sitz gewährleistet ist. Die Vorrichtung ist auch einfach zu handhaben und damit sowohl preiswert herzustellen als auch mit geringen Montagekosten verbunden.

Eine andere Ausführungsform ist in Figur 6 und 7 sowie Figur 9 und 10 gezeigt. Dabei ist an den Enden beider Rohre 1 und 2 eine Sicke 4 nach Art eines unterbrochenen Gewindeganges mit gegenläufiger Gewindesteigung ausgebildet. Als Verbindungsmittel ist wiederum eine Aufsteckhülse 6 vorgesehen. Die Sicken 4, die das unterbrochene Gewinde der Rohrstücke 1 und 2 bilden, ragen nach radial außen vor. Die Aufsteckhülse 6 weist jeweils an beiden Endbereichen nach Art eines unterbrochenen Gewindeganges ausgebildete nach radial innen vorragende Anzugsflächen 9 in gegensinniger Gewindeausbildung auf. Bei dieser Anordnung und Ausbildung werden zum Zwecke der Montage die Rohrstücke 1 und 2 so ausgerichtet, daß die Sicken 4 und die dazwischen befindlichen Freiräume axial fluchtend zueinander ausgerichtet sind. Die Aufsteckhülse 6 wird dann so ausgerichtet, daß deren Anzugsflächen 9 in die Freiräume 5 axial einschiebbar sind. In der Sollposition, in der die Enden der Rohrstücke 1 und 2 aneinander liegen oder ineinander-gesteckt sind, wird dann die Aufsteckhülse 6 verdreht, so daß die Anzugsflächen an den Sicken 4 gewindemäßig in Eingriff gebracht sind. Somit kann die Verbindung angespannt und angezogen werden.

Der Herstellungsvorgang erfolgt analog dem Vorgang, der bezüglich der Figuren 4 und 5 beschrieben ist. Der Herstellungsvorgang ist anhand der Figuren 9 und 10 verdeutlicht.

Eine weitere Ausführungsform ist in Figur 8 gezeigt. Hierbei ist am Ende der beiden Rohre 1 und 2 jeweils dem Rohrende benachbart eine radial vorragende umlaufende Stützsicke 3 ausgebildet. Mit axialem Abstand von dieser ist jeweils wieder eine Sicke 4 nach Art eines unter-brochenen Gewindeganges ausgebildet unter Bildung von Freiräumen 5. Die Gewindegänge der beiden Rohrstücke 1 und 2 sind dabei gegensinnig. Die Aufsteckhülse 6 weist zwei Endteile 14 auf, die jeweils auf die mit den umlaufenden Stützrippen 4 versehenen Rohrenden 1, 2 aufsteckbar und mit einem Anschlagrand 7 an die dem Rohrende zugewandten Flanke der Stützrippe 3 anlegbar sind. Die Aufsteckhülse 6 ist in den die Anschlagränder 7 axial überragenden Endbereichen im Durchmesser gegenüber dem Anschlagrand 7 aufgeweitet. In diesen Endbereichen weist die Aufsteckhülse 6 jeweils nach Art eines unterbrochenen Gewindeganges ausgebildete, nach radial innen vorragende Anzugsflächen 9 mit gegensinniger Gewindegangorientierung auf. Die Aufsteckhülse 6 weist im zwischen den Anschlagränder 7 befindlichen Mittelteil ein elastisches Entkopplungsmittel 15 auf, welches zur schwingungsmäßiges Entkopplung dient. Zur Montage werden die Rohrstücke 1, 2 wieder so ausgerichtet, daß die Freiräume 5 und die Sicken 4 axial miteinander in Flucht liegen. Die Aufsteckhülse 6 kann dannmit den Anzugsflächen 9 so aufgesteckt werden, daß diese durch die Freiräume 5 hindurchgreifen und durch Verdrehen der Aufsteckhülse 6 hinter die entsprechenden Sicken 4 greifen und beim weiteren Drehen der Aufsteckhülse 6 die Verbindung vorspannen.

Wie insbesondere aus Figur 2 und Figur 7 ersichtlich, kann die Aufsteckhülse 6 im Querschnitt mindestens über einen Teil ihrer Länge polygonal ausgebildet sein. Hierdurch werden Ansatzflächen für einen Schraubenschlüssel oder dergleichen Werkzeug gebildet, so daß die Aufsteckhülse 6 mittels eines Werkzeuges leicht drehbar ist.

Vorzugsweise ist auch vorgesehen, daß die Anzugsflächen 9 der Aufsteckhülse 6 und/oder die Sicken 4 der Rohrenden 1, 2 geriffelt oder in sonstiger Weise reibungserhöhend ausgebildet sind, so daß ein Lockern der angespannten Verbindung weitestgehend unterbunden ist.

## Patentansprüche

1. Vorrichtung zur Verbindung von Rohren (1,2) für Abgasanlagen von Kfz., wobei die miteinander zu verbindenden Rohrenden koaxial zueinander gerichtet und durch Verbindungsmittel miteinander lösbar verbindbar sind, am Rohrende des einen Rohres (1) eine radial umlaufende Stützrippe (3) ausgebildet ist, am Rohrende des anderen Rohres (2) ein unterbrochenes Gewinde ausgebildet ist und als Verbindungsmittel eine Aufsteckhülse (6) vorgesehen ist, die auf das mit umlaufender Stützrippe (3) versehene Rohr (1) vom der Stützrippe (3) abgewandten Ende aufsteckbar und mit einem Anschlagrand (7) gegen die dem Rohrende abgewandte Flanke der Stützrippe (3) anlegbar ist, die mit einem im Durchmesser größeren Bereich das Rohrende überragt und in diesem überragenden Bereich ein unterbrochenes Gewinde aufweist, so daß die Hülse (6) mit auf die Unterbrechungen (5) des Gewindes des Rohrendes ausgerichteten Gewindeteilen axial auf das andere Rohrende aufschiebbar ist und dann drehbar ist, so daß die Gewindeteile der Hülse (6) und die Gewindeteile des Rohrendes in Eingriff sind und die Verbindung anziehbar ist, **dadurch gekennzeichnet,** daß die Stützrippe (3) als Sicke ausgebildet ist, das unterbrochene Gewinde am einen Rohrende als Sicke (4) in Form eines unterbrochenen Gewindeganges ausgebildet ist, die Aufsteckhülse (6) in dem freien Endbereich (8), der dem Anschlagrand (7) folgt, eng an den Durchmesser des Rohres (1) angepaßt und im Schiebesitz auf diesem beweglich ist, wobei die Aufsteckhülse (6) zur Bildung des Anschlagrandes (7) verkröpft ist, das im überragenden Bereich der Aufsteckhülse (6) ausgebildete unterbrochene Gewinde durch nach Art eines einzigen unterbrochenen Gewindeganges ausgebildete, nach radial innen vorragende Anzugsflächen (9) gebildet ist.

2. Vorrichtung zur Verbindung von Rohren (1,2) für Abgasanlagen von Kfz, wobei die miteinander zu verbindenden Rohrenden koaxial zueinander gerichtet und durch ein Verbindungsmittel miteinander lösbar verbindbar sind, beide Rohrenden mit gegenläufiger Gewindeausbildung versehen sind, als Verbindungsmittel eine Hülse mit gegenläufiger Gewindeausbildung an ihren Enden vorgesehen ist, **dadurch gekennzeichnet,** daß an den Enden beider Rohre (1,2) eine Sicke (4) nach Art eines unterbrochenen Gewindeganges als Gewindeausbildung vorgesehen ist, die Hülse als Aufsteckhülse (6) ausgebildet ist, die an ihren Endbereichen als Gewindeausbildung jeweils nach Art eines unterbrochenen Gewindeganges ausgebildete, nach radial innen vorragende Anzugsflächen (9) aufweist, so daß die Aufsteckhülse (6) mit auf die Unterbrechungen (5) der Gewindegänge der Enden der beiden Rohre (1,2) ausgerichteten Anzugsflächen (9) auf die Rohrenden aufschiebbar und dann so drehbar ist, daß die Anzugsflächen (9) hinter die Sickenteile der Sicke (4) der Rohrenden greifen und die Verbindung anziehbar ist.

3. Vorrichtung nach einem der Ansprüche 1 oder 2, **dadurch gekennzeichnet,** daß die beiden Rohrenden (1,2) im Bereich der Verbindungsstelle begrenzt ineinandersteckbar sind.

4. Vorrichtung nach einem der Ansprüche 1 oder 2, **dadurch gekennzeichnet**, daß die beiden Rohrenden (1,2) im Bereich der Verbindungsstelle aneinanderlegbare Endkanten aufweisen, die ohne Dichtelement oder unter Zwischenlage eines Dichtelementes (10) aneinanderliegen.

5. Vorrichtung zur Verbindung von Rohren (1,2) für Abgasanlagen von Kfz, wobei die miteinander zu verbindenden Rohrenden koaxial zueinander gerichtet und miteinander lösbar verbindbar sind und das Verbindungselement ein elastisches Entkopplungsmittel aufweist, **dadurch gekennzeichnet,** daß am Ende beider Rohre (1,2) jeweils dem Rohrende benachbart eine radial vorragende, umlaufende Stützsicke (3) und mit Abstand von dieser eine Sicke (4) nach Art eines unterbrochenen Gewindeganges ausgebildet ist, wobei die durch die Sicken (4) gebildeten Gewindegänge gegenläufig sind, daß die Aufsteckhülse (6) zwei Endteile aufweist, die jeweils auf die mit den umlaufenden Stützsicken (3) versehenen Rohrenden (1,2) aufsteckbar und mit einem Anschlagrand (7) an die dem Rohrende zugewandte Flanke der Stützsicke (3) anlegbar sind, daß die Aufsteckhülse (6) in den die Anschlagränder (7) axial überragenden Endbereichen im Durchmesser gegenüber dem Anschlagrand (7) aufgeweitet sind und in diesen Endbereichen jeweils nach Art eines unterbrochenen Gewindeganges ausgebildete, nach radial innen vorragende Anzugsflächen (9) mit gegensinniger Gewindegangorientierung aufweist, daß die Aufsteckhülse (6) im zwischen den Anschlagrändern (7) befindlichen Mittelteil das elastische Entkopplungsmittel (15) aufweist, wobei die Aufsteckhülse (6) mit auf die Unterbrechungen (5) der Gewindegänge der Rohrenden ausgerichteten Gewindegangteileg axial auf die Rohrenden aufschiebar ist, d.h. bis zur Anlage der Anschlagränder (7) am die Stützsicke (3), und dann drehbar ist, so daß die Gewindegangteile der Hülse (6) hinter die Gewindegangteile der Rohrenden (1,2) greifen und die Verbindung anziehbar ist.

6. Vorrichtung nach einem der Ansprüche 1 bis 5, **dadurch gekennzeichnet,** daß die Aufsteckhülse (6) im Querschnitt mindestens über einen Teil ihrer Länge polygonal ausgebildet ist.

7. Vorrichtung nach einem der Ansprüche 1 bis 6, **dadurch gekennzeichnet,** daß die Gewindegangteile der Aufsteckhülse (6) und/oder der Rohrenden (1,2) gerauhte, geriffelte oder in sonstiger Weise reibungserhöhende Ausbildung zumindestens in den Bereichen aufweisen, die bei angespannter Verbindung mit Teilen des jeweils anderen Elementes im Berührungskontakt stehen.

8. Verfahren zur Herstellung einer Vorrichtung nach einem der Ansprüche 1 bis 7, **dadurch gekennzeichnet,** daß ein Rohrstück im Wege der hydrostatischen Aufweitung derart geformt wird, daß die Einzelelemente der Vorrichtung in axialer Folge einstückig gebildet werden, nämlich die Rohrstücke mit Stützsicken und/oder unterbrochenen Gewindegängen sowie die Aufsteckhülse mit Anschlagrand und/oder unterbrochenden Gewindegängen und daß der so geformte Körper zur Bildung der Einzelelemente durch quer zu dessen Längsachse verlaufende Trennvorgänge aufgetrennt wird.

## Claims

1. Device for connecting pipes (1, 2) for motor vehicle exhaust systems, wherein the pipe ends to be connected to one another are directed coaxially to one another and can be detachably connected to one another by connecting means, a radially circumferential supporting rib (3) is formed at the pipe end of the one pipe (1), a discontinuous thread is formed at the pipe end of the other pipe (2) and there is provided as connecting means a slip-on sleeve (6) which can be slipped onto the pipe (1) provided with the circumferential supporting rib (3) from the end remote from the supporting rib (3) and which can be applied by means of an stop rim (7) to that flank of the supporting rib (3) which is remote from the pipe end, which projects by means of a region which is greater in diameter beyond the pipe end and has a discontinuous thread in said projecting region so that the sleeve (6) can be pushed axially onto the other pipe end with thread parts aligned with the discontinuities (5) of the thread of the pipe end and is then rotatable so that the thread parts of the sleeve (6) and the thread parts of the pipe end are engaged and the connection can be tightened up, characterized in that the supporting rib (3) is formed as a corrugation, the discontinuous thread is formed at one pipe end as a corrugation (4) in the form of a discontinuous thread turn, the slip-on sleeve (6) is closely matched to the diameter of the pipe (1) in the unsupported end region (8) which follows the stop rim (7) and is movable on the latter in the sliding fit, wherein the slip-on sleeve (6) is crimped to form the stop rim (7) and the discontinuous thread formed in the projecting region of the slip-on sleeve (6) is formed by clamping surfaces (9) which are formed after the fashion of a single discontinuous thread turn and project radially inwards.

2. Device for connecting pipes (1, 2) for motor vehicle exhaust systems, wherein the pipe ends to be connected to one another are directed coaxially to one another and can be detachably connected to one another by a connecting means, both pipe ends are provided with an oppositely directed thread structure, a sleeve is provided with an oppositely directed thread structure at its ends as connecting means, characterized in that a corrugation (4) is provided as thread structure at the ends of both pipes (1, 2) after the fashion of a discontinuous thread turn, the sleeve is formed as a slip-on sleeve (6) which has clamping surfaces (9) protruding radially inwards as a thread structure at its end regions, each after the fashion of a discontinuous thread turn, so that the slip-on sleeve (6) can be pushed onto the pipe ends with clamping surfaces (9) aligned with the discontinuities (5) of the thread turns of the ends of the two pipes (1, 2) and is then rotatable so that the clamping surfaces (9) engage behind the corrugated parts of the corrugation (4) of the pipe ends and the connection can be tightened up.

3. Device according to either of Claims 1 or 2, characterized in that the two pipe ends (1, 2) can be plugged into one another to a limited extent in the region of the connecting point.

4. Device according to either of Claims 1 or 2, characterized in that the two pipe ends (1, 2) have, in the region of the connecting point, end edges which can be laid on one another and which are adjacent to one another without a sealing element or with a sealing element (10) being inserted.

5. Device for connecting pipes (1, 2) for motor vehicle exhaust systems, wherein the pipe ends to be connected to one another are directed coaxially to one another and can be detachably connected to one another and the connecting element has an elastic decoupling means, characterized in that a radially projecting, circumferential supporting corrugation (3) is formed at the end of each of the two pipes (1, 2) adjacent to the pipe end and, at a distance from the latter, a corrugation (4) is formed after the fashion of a discontinuous thread turn, wherein the thread turns formed by the corrugations (4) are oppositely directed, in that the slip-on sleeve (6) has two end parts which can each be slipped onto the pipe ends (1, 2) provided with the circumferential supporting corrugations (3) and can be applied by means of a stop rim (7) to that flank of the supporting corrugation (3) which is adjacent to the pipe end, in that the slip-on sleeve (6) is widened in diameter in the end regions projecting axially beyond the stop rims (7) compared with the stop rim (7) and has, in said end regions, radially inwardly projecting clamping surfaces (9) each formed after the fashion of a discontinuous thread turn and having oppositely directed thread turn orientation, and in that the slip-on sleeve (6) has the elastic decoupling means (15) in the central part situated between the stop rims (7), wherein the slip-on sleeve (6) can be pushed axially onto the pipe ends with thread turn parts aligned with the discontinuities (5) of the thread turns of the pipe ends, i.e. until making contact with the stop rims (7) at the supporting corrugation (3), and is then rotatable so that the thread turn parts of the sleeve (6) engage behind the thread turn parts of the pipe ends (1) and the connection can be tightened up.

6. Device according to one of Claims 1 to 5, characterized in that the slip-on sleeve (6) is polygonally formed in cross section at least over a part of its length.

7. Device according to one of Claims 1 to 6, characterized in that the thread turn parts of the slip-on sleeve (6) and/or the pipe ends (1, 2) have a roughened, rifled or an otherwise friction-increasing structure at least in the regions which are in contiguous contact with parts of the respective other element when the connection is tightened up.

8. Method of producing a device according to one of Claims 1 to 7, characterized in that a pipe piece is moulded by hydrostatic widening so that the individual elements of the device are integrally formed in axial sequence, namely the pipe pieces with supporting corrugations and/or discontinuous thread turns, and also the slip-on sleeve with stop rim and/or discontinuous thread turns, and in that the body thus moulded is cut by means of a cutting operation extending transversely to its longitudinal axis to form the individual elements.

## Revendications

1. Dispositif pour l'assemblage de tuyaux (1, 2), pour systèmes de gaz d'échappement de véhicules automobiles, les extrémités des tuyaux, devant être solidarisées, étant dirigées coaxialement l'une vers l'autre et pouvant être reliées l'une à l'autre, de manière libérable, par des moyens de liaison ; une nervure d'appui (3) s'étendant périphériquement dans le sens radial, étant ménagée à l'extrémité de l'un (1) des tuyaux ; un filetage discontinu étant façonné à l'extrémité de l'autre tuyau (2) ; et une douille emboîtable (6), prévue en tant que moyen de liaison, pouvant être emboîtée sur le tuyau (1) pourvu d'une nervure périphérique d'appui (3), à partir de l'extrémité tournée à l'opposé de ladite nervure d'appui (3), et pouvant être appliquée, par un rebord de butée (7), contre le flanc de la nervure d'appui (3) tourné à l'opposé de l'extrémité tubulaire, qui déborde de ladite extrémité tubulaire par une région de plus fort diamètre, et comporte un filetage discontinu dans cette région débordante, si bien que la douille (6) peut être enfilée axialement sur l'autre extrémité tubulaire, par des parties filetées orientées vers les discontinuités (5) du filetage de l'extrémité tubulaire, et peut ensuite être animée d'une rotation telle que les parties filetées de la douille (6) et les parties filetées de l'extrémité tubulaire soient en prise, et que la solidarisation puisse être bloquée, caractérisé par le fait que la nervure d'appui (3) est réalisée sous la forme d'une moulure ; le filetage discontinu, sur l'une des extrémités tubulaires, se présente comme une moulure (4) revêtant la forme d'un filet discontinu ; la douille emboîtable (6) est étroitement adaptée au diamètre du tuyau (1) dans la région extrême libre (8) succédant au rebord de butée (7), et est mobile avec assise coulissante sur ledit tuyau, la douille emboîtable (6) étant coudée pour former le rebord de butée (7) ; et le filetage discontinu, façonné dans la région débordante de la douille emboîtable (6), est formé par des surfaces de serrage (9) saillant radialement vers l'intérieur et conçues à la manière d'un unique filet discontinu.

2. Dispositif pour l'assemblage de tuyaux (1, 2), pour systèmes de gaz d'échappement de véhicules automobiles, les extrémités des tuyaux, devant être solidarisées, étant dirigées coaxialement l'une vers l'autre et pouvant être reliées l'une à l'autre, de manière libérable, par un moyen de liaison ; les deux extrémités tubulaires étant munies d'une réalisation filetée à pas inversés ; et une douille, prévue en tant que moyen de liaison, étant de réalisation filetée à pas inversés à ses extrémités, caractérisé par le fait qu'une moulure (4), se présentant à la manière d'un filet discontinu, est prévue en tant que réalisation filetée aux extrémités des deux tuyaux (1, 2) ; et la douille est réalisée sous la forme d'une douille emboîtable (6) comportant sur ses régions extrêmes, en tant que réalisation filetée, des surfaces de serrage (9) saillant radialement vers l'intérieur et respectivement conçues à la manière d'un filet discontinu, si bien que la douille emboîtable (6) peut être enfilée sur les extrémités tubulaires par des surfaces de serrage (9) orientées vers les discontinuités (5) des filets des extrémités des deux tuyaux (1, 2) et peut ensuite être animée d'une rotation telle que les surfaces de serrage (9) pénètrent derrière les parties empreintes de la moulure (4) des extrémités tubulaires, et que la solidarisation puisse être bloquée.

3. Dispositif selon l'une des revendications 1 ou 2, caractérisé par le fait que les deux extrémités des tuyaux (1, 2) peuvent être emboîtées l'une dans l'autre, de manière limitée, dans la région de la zone de solidarisation.

4. Dispositif selon l'une des revendications 1 ou 2, caractérisé par le fait que les deux extrémités des tuyaux (1, 2) présentent, dans la région de la zone de solidarisation, des bords extrêmes qui peuvent porter l'un contre l'autre et sont appliqués l'un sur l'autre sans élément d'étanchement, ou avec interposition d'un élément d'étanchement (10).

5. Dispositif pour l'assemblage de tuyaux (1, 2), pour systèmes de gaz d'échappement de véhicules automobiles, les extrémités des tuyaux, devant être solidarisées, étant dirigées coaxialement l'une vers l'autre et pouvant être reliées l'une à l'autre, de manière libérable, et l'élément de liaison étant doté d'un moyen élastique de désaccouplement, caractérisé par le fait qu'une moulure périphérique d'appui saillant radialement et, à distance de cette dernière, une moulure (4) du type filet discontinu, sont ménagées à l'extrémité des deux tuyaux (1, 2), respectivement au voisinage de l'extrémité tubulaire, les filets formés par les moulures (4) présentant des pas inversés ; par le fait que la douille emboîtable (6) comprend deux parties extrêmes pouvant être respectivement emboîtées sur les extrémités des tuyaux (1, 2) qui sont pourvues des moulures périphériques d'appui (3), et pouvant être appliquées, par un rebord de butée (7), contre le flanc de la moulure d'appui (3) qui est tourné vers l'extrémité tubulaire ; par le fait que la douille emboîtable (6) est évasée diamétralement, par rapport au rebord de butée (7), dans les régions extrêmes dépassant axialement au-delà des rebords de butée (7), et comporte, dans ces régions extrêmes, des surfaces de serrage (9) saillant radialement vers l'intérieur, respectivement conçues à la manière d'un filet discontinu, et munies de filets à orientation de pas inversée ; et par le fait que la douille emboîtable (6) présente le moyen élastique de désaccouplement (15) dans la partie centrale située entre les rebords de butée (7), ladite douille emboîtable (6) pouvant être enfilée axialement sur les extrémités tubulaires, par des parties de filets orientées vers les discontinuités (5) des filets desdites extrémités tubulaires, c'est-à-dire jusqu'à ce que les rebords de butée (7) portent contre la moulure d'appui (3), et pouvant ensuite être animée d'une rotation telle que les parties de filets de ladite douille (6) pénètrent derrière les parties de filets des extrémités des tuyaux (1, 2), et que la solidarisation puisse être bloquée.

6. Dispositif selon l'une des revendications 1 à 5, caractérisé par le fait que la douille emboîtable (6) est de réalisation polygonale en coupe transversale, au moins sur une partie de sa longueur.

7. Dispositif selon l'une des revendications 1 à 6, caractérisé par le fait que, au moins dans les régions en contact avec des parties de l'autre élément considéré lorsque la solidarisation est serrée, les parties de filets de la douille emboîtable (6) et/ou des extrémités des tuyaux (1, 2) possèdent une réalisation rendue rugueuse, striée ou augmentant le frottement d'une autre manière.

8. Procédé de fabrication d'un dispositif selon l'une des revendications 1 à 7, caractérisé par le fait qu'une pièce tubulaire est mise en forme par évasement hydrostatique, de façon telle que les éléments individuels du dispositif soient formés d'un seul tenant en succession axiale, c'est-à-dire les pièces tubulaires pourvues de moulures d'appui et/ou de filets discontinus, ainsi que la douille emboîtable munie d'un rebord de butée et/ou de filets discontinus ; et par le fait que le corps ainsi mis en forme est scindé pour former les éléments individuels, par des opérations de séparation s'effectuant transversalement par rapport à son axe longitudinal.
